Europäisches Patentamt

European Patent Office

Office européen des brevets

(19)

(11) Numéro de publication: **0 172 084 B1**

(12)

# FASCICULE DE BREVET EUROPEEN

(45) Date de publication de fascicule du brevet:
27.03.91

(51) Int. Cl.⁵: **A01D 87/12**, A01F 29/00,
B65G 21/14

(21) Numéro de dépôt: 85401487.5

(22) Date de dépôt: 18.07.85

(54) **Nouvelle machine dérouleuse distributrice de fourrage récolté en balles rondes.**

(30) Priorité: 20.07.84 FR 8411754
21.11.84 FR 8417999

(43) Date de publication de la demande:
19.02.86 Bulletin 86/08

(45) Mention de la délivrance du brevet:
27.03.91 Bulletin 91/13

(84) Etats contractants désignés:
AT BE CH DE FR GB IT LI NL SE

(56) Documents cités:
DE-A- 3 126 447
FR-A- 2 456 058
FR-A- 2 501 130
GB-A- 2 119 337

(73) Titulaire: **ETABLISSEMENTS LUCAS G**
**B.P. 9 La Verrie**
**F-85130 La Gaubretière(FR)**

(72) Inventeur: **Lucas, Gérard**
**9 rue du Moulin**
**F-85130 La Verrie(FR)**

(74) Mandataire: **Phélip, Bruno et al**
**c/o Cabinet Harlé & Phélip 21, rue de La**
**Rochefoucauld**
**F-75009 Paris(FR)**

**Description**

La présente invention concerne les machines permettant la distribution de fourrages destinés à l'alimentation du bétail ou à la réalisation de la litière dans les bâtiments d'élevage et plus particulièrement les fourrages se présentant sous la forme de balles rondes.

Il est de plus en plus connu et utilisé le principe de ramassage des fourrages consistant à récolter l'endain déposé au sol par les moyens de coupe et à enrouler celui-ci sous la forme d'un cylindre spiralé communément appelé balle ronde.

La machine, suivant l'invention, permet d'effectuer la distribution dans les bâtiments d'élevage du fourrage ainsi récolté, au fur et à mesure du déroulage de la balle ronde au sein même de la machine.

Il est connu, pour améliorer le déroulement de la balle de fourrage, d'utiliser une remorque dont le fond comporte un tapis transporteur sans fin constitué d'une portion de trajectoire plane et d'une paroi aval inclinée vers le haut, formant un dièdre.

Une telle machine est décrite dans le document FR-A-2.501.130. Ce document présente une remorque destinée à la distribution et/ou au mélange de produit ; le fond de cette remorque, en forme de dièdre, permet, notamment, le déroulement de la balle ronde.

Le contrôle du déroulement de la balle et, en particulier, la réalisation d'un tapis homogène, bien constitué, destiné par exemple à un dispositif de déchiquetage et d'éjection, est difficile à obtenir par les moyens tels que décrits dans le document précité.

La présente invention vise à remédier à ces inconvénients ; elle a pour objet, une machine constituée d'une remorque munie de deux roues et d'un timon d'attelage à un tracteur agricole. La remorque comporte une benne de volume nécessaire pour contenir au moins une balle ronde disposée horizontalement d'une façon telle que son axe soit placé dans un plan frontal de la benne. Le fond de la benne est équipé d'un dispositif transporteur du type à chaines latérales reliées par des barrettes, lequel dispositif transporteur, en forme de tapis sans fin, est destiné à acheminer le produit déroulé vers un dispositif de déchiquetage et/ou d'éjection. Ce dispositif de déchiquetage et d'éjection du produit est constitué d'une turbine dont le rotor de grand diamètre, muni sur sa face frontale de dents déchiqueteuses et sur sa périphérie de pales de ventilation, évolue à l'intérieur d'un carénage débouchant à l'extérieur par un ou plusieurs orifices de distribution. Le tapis transporteur forme un dièdre à l'intérieur duquel se déroule la balle de fourrage disposée horizontalement et frontalement par rapport au sens de défilement du fond mobile. Ce dièdre est déterminé par deux portions de trajectoire successives : une portion amont et une portion ascendante.

La machine selon l'invention est caractérisée en ce que le dispositif de déroulage, constitué des portions amont et ascendante du tapis, forme un dièdre d'angle variable par un réglage de l'inclinaison de la partie ascendante.

Ce réglage d'inclinaison est rendu possible par le déplacement de la portion amont, en direction de la portion ascendante ; ce déplacement est réalisé grâce à la mobilité en translation de l'axe situé à l'extrémité amont du tapis.

La variation de l'angle du dièdre formé par le tapis transporteur peut être obtenue manuellement ou à l'aide d'un ou de deux vérins hydrauliques agissant sur la partie inclinée dudit tapis en faisant pivoter ladite partie autour de l'axe horizontal commun aux noix d'entraînement situées au point culminant de la partie inclinée du transporteur. Complémentairement à une telle disposition la machine comporte des moyens permettant de faire varier la position du dièdre dans l'espace. C'est ainsi que les roues de la remorque peuvent être montées sur un essieu porté par chacune des extrémités de bras latéraux solidaires d'un même axe horizontal et dont la manoeuvre de pivotement tend à modifier la garde au sol de la remorque par relevage de l'arrière de celle-ci en gardant comme point fixe le point d'attelage du timon sur le tracteur ; le dièdre du tapis transporteur s'apparente alors à un support mobile en forme de vé, supprimant la tendance de la balle ronde à revenir vers l'arrière de la remorque et permettant ainsi de maintenir ladite balle à une distance constante par rapport aux extrémités avant et arrière de la benne au cours de son déroulage sous l'effet de la translation du tapis. Le même résultat peut être obtenu au moyen d'une articulation du timon sur le châssis de la remorque, en conjugaison ou non avec le dispositif de relevage de l'arrière de la remorque précédemment décrit. L'équipement de la remorque est complété par une herse disposée frontalement à l'arrivée du produit et en amont de la zone d'accès de celui-ci dans le dispositif de déchiquetage et d'éjection ; cette herse munie de dents escamotables ou non avec ressorts de rappel a pour mission d'exercer une pression permanente sur le produit en cas d'utilisation de la machine pour distribuer du fourrage désilé. Elle est prévue relevable pour l'utilisation de la machine en tant que dérouleuse de balles rondes.

Un autre but de l'invention est de pouvoir situer le dièdre en un point quelconque de la trajectoire active du tapis mobile, entre une portion de trajectoire amont horizontale, de longueur variable et une portion de trajectoire aval horizontale de longueur fixe, lesquelles portions amont et aval peuvent être situées dans un même plan ou dans des plans différents, le sens de translation du tapis pouvant dans certains cas être inversé de manière à obtenir l'évacuation du produit déroulé, vers l'arrière, sous forme d'un tapis, lequel peut être ou non foisonné avant sa dépose sur le sol.

Les dessins annexés illustrent des modes de réalisation possibles de la machine conformément à la présente invention. Ceux-ci représentent :

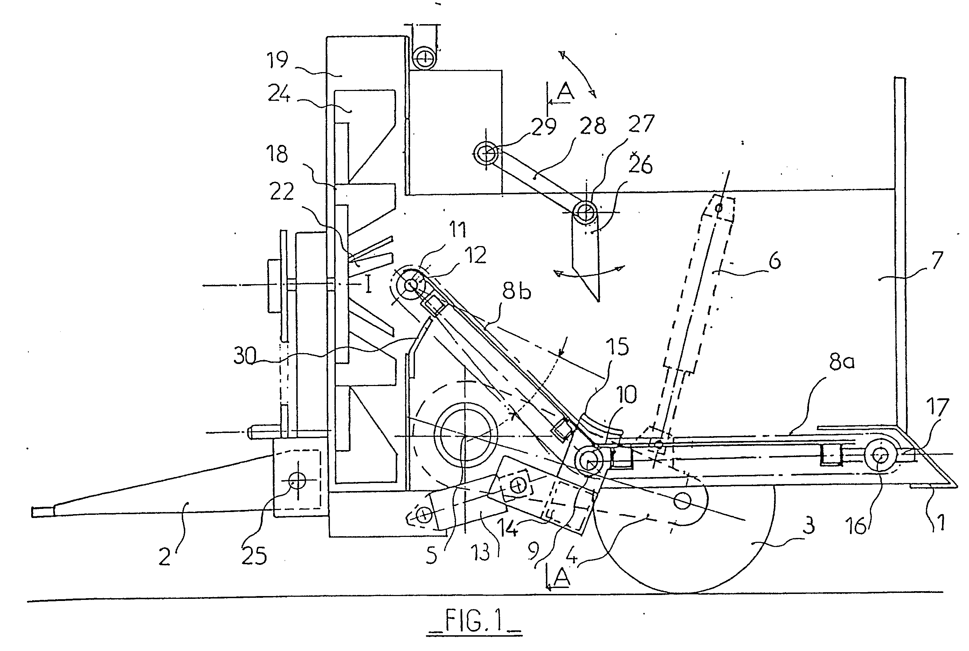

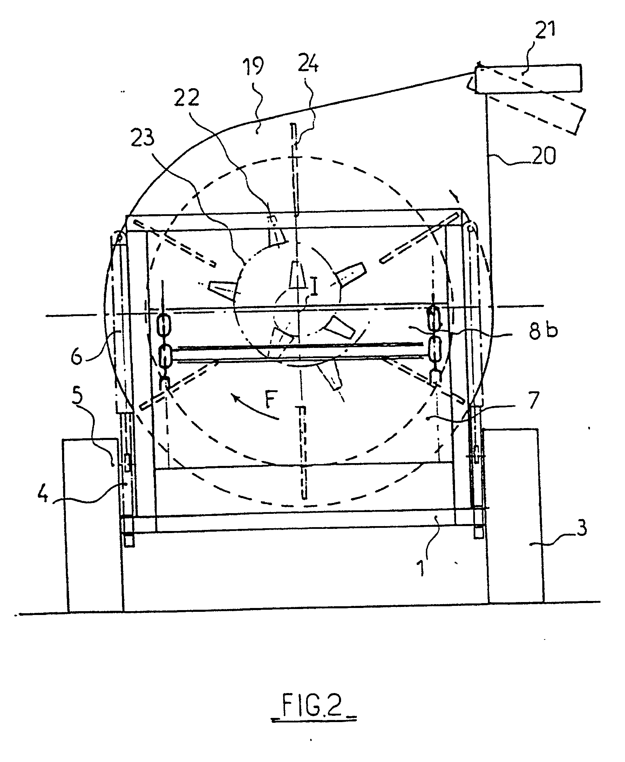

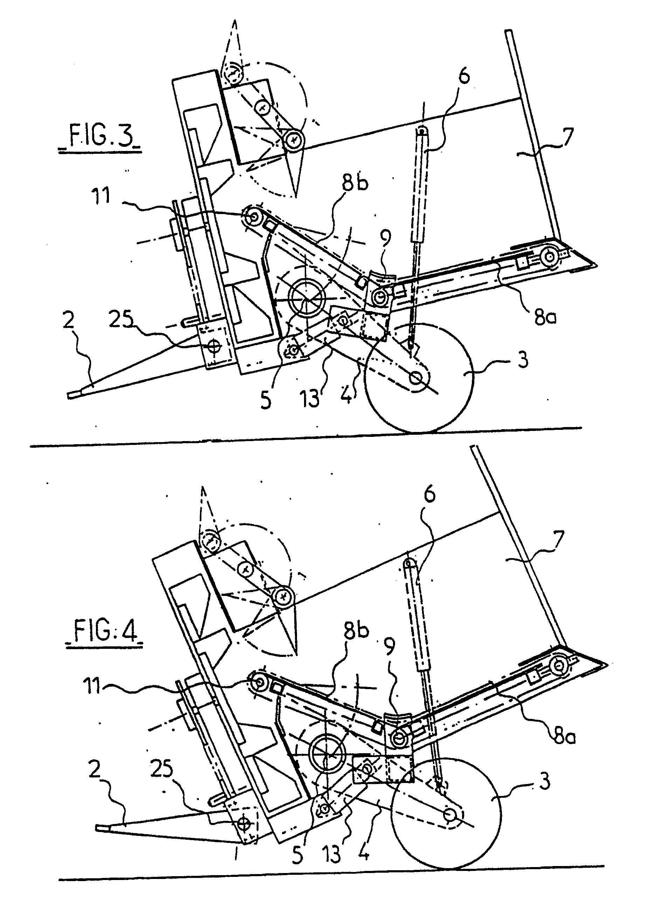

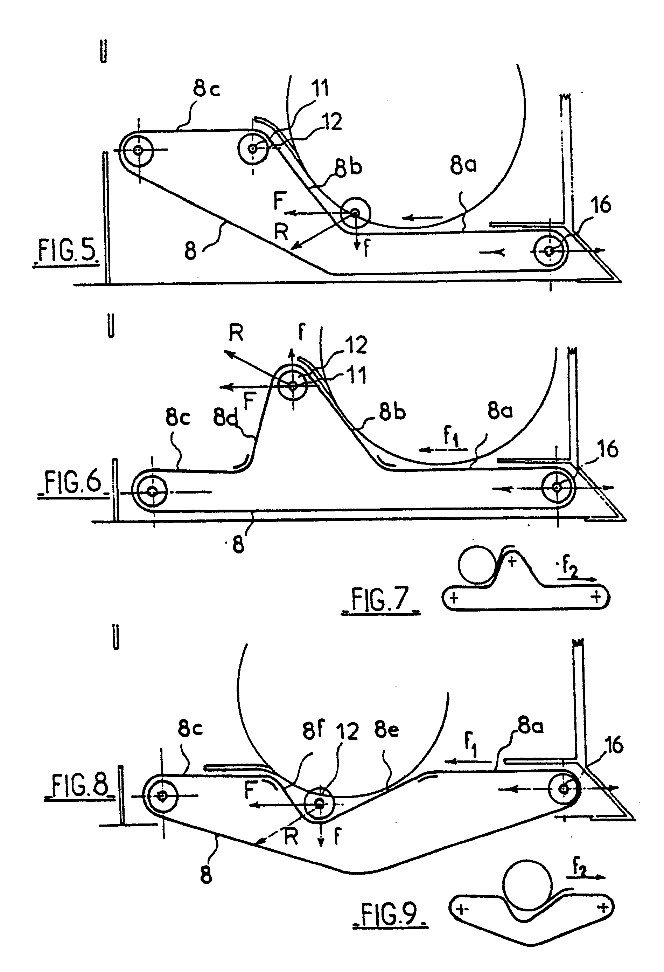

- en figure 1 une vue en coupe longitudinale de la machine selon une variante de réalisation dans laquelle le dièdre du tapis transporteur est réglable hydrauliquement,
- en figure 2, une vue en coupe transversale suivant AA de la même machine,
- en figures 3 et 4, des vues schématiques longitudinales de configurations possibles de la remorque,
- en figure 5, une vue schématique longitudinale du tapis transporteur dans laquelle le dièdre est formé par une trajectoire du tapis transporteur, selon un dièdre d'angle variable mais dont la partie inclinée ascendante, débouche en partie haute, sur une portion de trajectoire horizontale de longueur fixe,
- en figure 6, une vue schématique longitudinale du tapis transporteur, dans laquelle le dièdre nécessaire au maintien de la balle, en position fixe par rapport aux extrémités avant et arrière de la benne pendant son déroulement, est formé par une remontée du tapis transporteur, par rapport aux portions de trajectoire amont et aval, la balle pouvant être placée d'un côté ou de l'autre de cette remontée, en fonction du sens de défilement du tapis,
- en figure 7, une vue schématique, à plus petite échelle, illustrant l'inversion du sens de défilement du tapis,
- en figure 8, une vue schématique longitudinale du tapis transporteur, dans laquelle le dièdre est formé par une creusure réalisée sur une partie de la trajectoire du tapis, entre la portion de trajectoire amont et la portion de trajectoire aval,
- en figure 9, une vue schématique, à plus petite échelle, illustrant l'inversion du sens de défilement du tapis.

Tel que représenté, la remorque est constituée d'un châssis 1 comportant à l'avant un timon 2 permettant son attelage avec un tracteur. Ce châssis est porté par une paire de roues 3 montées sur un axe commun reliant deux bras latéraux 4 pouvant osciller autour d'axes 5 sous l'action de vérins hydrauliques à double effet 6, la manoeuvre desquels provoque le relevage ou l'abaissement de l'arrière de la remorque, le point d'attelage sur le tracteur correspondant à l'extrémité du timon étant fixe. châssis porte une benne parallélépipédique 7, de volume suffisant pour accueillir au moins une balle ronde disposée, transversalement et horizontalement dans la benne. Le fond de la benne est équipé d'un tapis transporteur 8 du type à chaines latérales d'entrainement reliées entre elles par des barrettes transversales. Ce tapis a une trajectoire disposée selon un dièdre comportant une partie sensiblement horizontale 8a et une partie inclinée ascendante 8b, articulées entre elles autour d'un axe horizontal 9 passant par des réas latéraux 10 permettant le changement de trajectoire du tapis et situés à l'extrémité aval de la partie 8a de celui-ci. La partie ascendante 8b du tapis transporteur est montée oscillante autour de l'axe horizontal 11 passant par les noix d'entrainement 12 du tapis situées au point culminant de la trajectoire de celui-ci. Le réglage d'inclinaison de la partie 8b, c'est-à-dire le réglage de l'angle du dièdre formé par cette partie avec la partie 8a peut s'effectuer manuellement ou à l'aide d'un vérin hydraulique à double effet 13 dont l'action s'exerce sur une traverse 14 portant à ses extrémités les réas latéraux 10 ainsi que les guides des chaines 15 permettant le changement de trajectoire de celles-ci. La variation angulaire du dièdre entraine un déplacement en translation de l'extrémité amont de la partie 8a du tapis : à cet effet, les noix d'entrainement 16 équipant cette extrémité sont montées sur un coulisseau mobile en translation dans une glissière 17 solidaire du châssis.

La partie ascendante 8b du tapis débite dans une zone située sensiblement dans l'axe du rotor 18 d'une turbine de grand diamètre tournant à l'intérieur d'une volute 19 constituant le carénage d'un ventilateur d'éjection du produit vers l'extérieur à travers un orifice latéral 20 muni d'un déflecteur 21. La face frontale du rotor comporte en sa partie centrale un certain nombre de dents 22 constituant le dispositif de déchiquetage : dans un mode préférentiel de réalisation, ces dents sont réparties en position légèrement inclinée, selon une disposition en colimaçon ou spirale d'Archimède 23, de sorte que les dents se succédant au cours de la rotation du rotor selon la flèche F, s'écartent successivement du pôle I de la spirale confondu avec le centre du rotor. Une telle disposition favorise le rejet du produit déchiqueté vers la périphérie où il est alors pris en charge par les pales 24 du rotor.

Afin de favoriser l'accès de la balle ronde à la partie ascendante 8b du tapis transporteur et son déroulement sur ladite partie, la balle étant entrainée sur elle-même par l'action des barrettes transversales du tapis, on peut soit agir sur le vérin 5 commandant la variation angulaire du dièdre, et éventuellement sur le ou les vérins 6 commandant le relevage de l'arrière de la remorque, ou bien encore infléchir l'attelage par articulation autour d'un axe horizontal 25 situé à la liaison du timon 2 avec le châssis 1, chacune de ces manoeuvres pouvant s'effectuer séparément ou en combinaison avec l'une ou l'ensemble des deux autres, tel que représenté schématiquement dans les figures 3 et 4.

Tel que représenté en figure 5, la trajectoire du tapis transporteur 8 comporte une partie sensiblement horizontale 8a et une partie inclinée ascendante 8b, cette dernière pouvant occuper une position plus ou moins inclinée par oscillation autour de l'axe 11, portant les noix d'entrainement 12 du tapis au point culminant de sa trajectoire ascendante. La trajectoire du tapis est prolongée en ce point par une portion aval horizontale 8c de longueur fixe ; le passage du produit déroulé, sur cette portion de trajectoire, peut permettre d'effectuer une opération de démêlage du produit à l'aide d'une batterie de hérissons, par exemple, avant d'être évacué par l'orifice donnant accès au dispositif de déchiquetage et d'éjection. La variation de l'angle du dièdre peut être obtenue par déplacement du point d'articulation des portions de trajectoire 8a et 8b, par translation horizontale et/ou verticale, matérialisée respectivement par les flèches F et f ou leur résultante R. Cette variation d'angle est rendue possible par le montage coulissant en translation de l'axe 16 portant les noix d'extrémité du tapis.

Dans la variante de réalisation illustrée en figure 6, la trajectoire du tapis transporteur 8 est composée d'une portion amont 8a, horizontale, d'une partie inclinée ascendante 8b, jusqu'à un point culminant correspondant au passage du tapis sur les noix d'entrainement 12, suivie d'une partie inclinée descendante 8d aboutissant sur une portion de trajectoire aval 8c horizontale de longueur fixe dont la fonction est identique à celle définie dans le cas de la figure 5. Selon le sens de défilement du tapis suivant f1, le dièdre à considérer pour maintenir la botte est celui formé par les parties 8a et 8b. Pour un défilement en sens inverse, c'est-à-dire suivant la flèche f2 (figure 7), le dièdre à considérer est celui formé par les parties 8c et 8d, la balle à dérouler étant alors placée sur la partie 8c, entre l'extrémité avant de la remorque et la partie inclinée 8d. La variation de l'angle du dièdre peut être obtenue, dans l'un ou l'autre cas, par déplacement de l'axe 11 portant les noix d'entrainement 12, du tapis, par translation horizontale et/ou verticale, matérialisée respectivement par les flèches F et f ou leur résultante R, cette variation étant rendue possible par la mobilité en translation de l'axe 16 portant les noix d'extrémité de la portion amont du tapis.

Dans l'exemple d'une autre variante de réalisation illustrée en figure 8, la trajectoire du tapis est composée d'une portion amont horizontale 8a, d'une partie inclinée descendante 8e, jusqu'au point le plus bas de la trajectoire correspondant au passage du tapis sur les noix d'entrainement 12, suivie d'une partie inclinée ascendante 8f aboutissant sur une portion de trajectoire aval horizontale 8c de longueur fixe, de fonction identique à celle définie dans les deux variantes précédentes. La variation de l'angle du dièdre peut être obtenue par déplacement de l'axe 11 portant les noix d'entrainement 12 du tapis, par translation horizontale et/ou verticale matérialisée respectivement par les flèches F et f ou leur résultante R, cette variation étant rendue possible par la faculté de déplacement en translation de l'axe 16 portant les noix d'extrémité de la portion amont du tapis. Une telle disposition assure le maintien de la balle à une distance constante des extrémités de la benne, pendant son déroulage, quel que soit le sens de défilement du tapis selon fi ou f2 (figure 9).

Dans l'une ou l'autre de ces variantes, la portion de trajectoire aval horizontale permet de rendre la couche du produit homogène avant son admission au dispositif de déchiquetage et assure ainsi un débit régulier de distribution dudit produit par la machine.

La remorque, telle que décrite, peut également être utilisée pour la distributrion de produits désilés déposés dans la benne à l'aide d'une griffe. Dans ce cas, elle est équipée d'une herse ou peigne 26 dont les dents disposées verticalement peuvent être fixes ou escamotables par rotation autour d'un axe horizontal 27 ; dans ce cas chaque dent est assujettie à l'action d'un ressort de rappel. Ce peigne a pour but d'exercer une pression de contact permanente sur le produit ; il est supporté à ses deux extrémités par des bras 28 basculant autour d'un axe horizontal 29 permettant d'une part un positionnement en hauteur des dents de la herse selon le débit désiré, du produit ou d'autre part un escamotage complet du peigne pour l'utilisation de la remorque en tant que dérouleuse de balles rondes.

L'accès du fourrage déroulé ou du produit désilé au niveau du dispositif de déchiquetage s'effectue à travers une découpure du carénage 19 du ventilateur d'éjection, laquelle découpure de forme rectangulaire est bordée en partie basse par une bavette souple 30 destinée à empêcher la chute du produit sous la partie 8b du tapis.

L'invention ne se limite pas aux modes de réalisation spécialement décrits, mais elle embrasse toutes les variantes possibles à condition que celles-ci ne soient pas en opposition avec l'objet de chacune des revendications annexées à la présente description.

C'est ainsi que dans l'un ou l'autre cas, le dièdre peut avoir une valeur angulaire fixe et se situer en un point quelconque entre les portions amont et aval dans les réalisations, selon les figures 6 ou 8.

La machine, objet de l'invention, peut être utilisée pour le déroulage de toutes balles rondes de fourrage et la distribution de celui-ci à titre de nourriture du bétail ou de litière.

**Revendications**

1. Machine destinée à la distribution de fourrage récolté en balles rondes ou de produit désilé destiné à l'alimentation du bétail ou à la réalisation de litières, constituée d'une remorque du type comportant un châssis (1) muni d'un timon d'attelage (2) à un tracteur agricole, d'une benne (7) équipée d'un fond mobile (8) en forme de tapis sans fin, acheminant le produit déroulé vers un dispositif de déchiquetage et/ou d'éjection, ledit tapis formant un dièdre à l'intérieur duquel se déroule la balle de fourrage disposée horizontalement et frontalement par rapport au sens de défilement du fond mobile (8), lequel dièdre est déterminé par deux portions de trajectoire successives : une portion amont (8a , 8e ) et une portion ascendante (8b , 8f ), caractérisée en ce que le dispositif de déroulage, constitué desdites portions amont (8a , 8e ) et ascendante (8b , 8f ), forme un dièdre d'angle variable par un réglage de l'inclinaison de la portion ascendante (8b , 8f ), ce réglage d'inclinaison étant rendu possible par le déplacement de la portion amont (8a , 8e ) en direction de la portion ascendante (8b , 8f ), lequel déplacement est lié à la mobilité en translation d'un axe (16) situé à l'extrémité amont du tapis.

2. Machine selon la revendication 1, caractérisée en ce que le fond mobile (8) constituant le dispositif de déroulage des balles rondes est un tapis transporteur du type à chaînes latérales reliées par des barrettes dont la trajectoire se compose d'une portion amont (8a ) sensiblement horizontale s'étendant entre des réas latéraux (10) et l'axe (16), et d'une portion ascendante (8b ), articulées entre elles autour d'un axe horizontal (9) portant des réas latéraux (10), laquelle portion ascendante (8b ) est montée oscillante autour d'un axe fixe horizontal (11) passant par des noix (12) du tapis, situées au point culminant de la trajectoire de celui-ci.

3. Machine selon la revendication 2, caractérisée en ce que le réglage d'inclinaison de la portion ascendante (8b ) de la trajectoire du tapis transporteur peut être effectué manuellement ou à l'aide d'un vérin hydraulique (13) à double effet dont l'action s'exerce sur une traverse portant à ses extrémités les réas latéraux (10), ainsi que des guides des chaînes (15) permettant le changement de trajectoire de celles-ci.

4. Machine selon l'une quelconque des revendications 2 ou 3, caractérisée en ce que l'axe (16) situé à l'extrémité amont de la portion amont (8a ) du tapis transporteur est monté sur un coulisseau mobile en translation dans une glissière (17) solidaire du châssis, afin de permettre le déplacement en translation de ladite extrémité provoqué par la variation angulaire du dièdre.

5. Machine selon la revendication 1, caractérisée en ce qu'elle comporte, dans le prolongement de ladite portion de trajectoire ascendante (8b ), et faisant partie du même tapis, une portion de trajectoire horizontale (8c ) sur laquelle s'effectue éventuellement une opération de démêlage du produit avant son évacuation vers le dispositif de déchiquetage et/ou d'éjection.

6. Machine selon la revendication 1, caractérisée en ce que la trajectoire du tapis transporteur (8) est composée d'une portion amont (8a ) horizontale, de longueur variable, d'une portion ascendante (8b ) jusqu'à un point culminant correspondant au passage du tapis sur des noix d'entraînement (12), suivie d'une portion inclinée descendante (8d ) aboutissant sur une portion de trajectoire aval (8c ) horizontale de longueur fixe, le dièdre permettant le maintien de la balle pendant son déroulement étant, pour un défilement du tapis de l'amont vers l'aval, celui formé par les portion amont (8a ) et ascendante (8b), et pour un sens inverse de défilement du tapis, le dièdre formé par les portions de trajectoire aval (8c ) et descendante (8d ), la variation de la valeur angulaire du dièdre pouvant être obtenue dans l'un ou l'autre des cas, par déplacement de l'axe (11) portant les noix d'entraînement (I2) du tapis situées au point culminant de la trajectoire active, par translation horizontale et/ou verticale, cette variation étant rendue possible par la mobilité en translation de l'axe (16) portant les noix d'extrémité de la portion amont du tapis, lesquelles noix sont montées sur un coulisseau circulant dans une glissière (17).

7. Machine selon la revendication 1, caractérisée en ce que la trajectoire du tapis est composée d'une portion amont (8a ) horizontale de longueur variable, d'une portion inclinée descendante (8e ) jusqu'au point le plus bas de la trajectoire correspondant au passage du tapis sur les noix d'entraînement (12), suivie d'une portion inclinée ascendante (8f ) aboutissant sur une portion de trajectoire aval horizontale (8c ) de longueur fixe, le dièdre permettant le maintien de la balle pendant son déroulement étant, quel que soit le sens de défilement du tapis, celui formé par les portions inclinée descendante (8e ) et ascendante (8f ), la variation de la valeur angulaire du dièdre pouvant être obtenue par déplacement de l'axe (11) portant les noix d'entraînement (12) du tapis, situées au point le plus bas de la trajectoire active, par translation horizontale et/ou verticale, cette variation étant rendue possible par la mobilité en translation de l'axe (16) portant les noix d'extrémité de la portion amont du tapis, lesquelles noix sont montées sur un coulisseau circulant dans une glissière (17).

8. Machine selon l'une quelconque des revendications 1 à 7, caractérisée en ce que l'extrémité de la portion de trajectoire aval du tapis transporteur débite au niveau du dispositif de déchiquetage à travers une découpure rectangulaire exécutée sur la face frontale du carénage (19) du dispositif d'éjection, laquelle découpure est bordée en sa partie basse, par une bavette souple (30) destinée à empêcher la chute du produit sous la partie ascendante (8b ,8f) du tapis.

9. Machine selon l'une quelconque des revendications 1 à 8, caractérisée en ce que le dispositif de déchiquetage est constitué d'un certain nombre de dents (22) implantées sur la face frontale du rotor (18) du ventilateur d'éjection, en position légèrement inclinée et concourantes vers l'axe du rotor et réparties selon une spirale d'Archimède de façon telle qu'en fonction du sens de rotation les points d'implantation des dents successives s'éloignent du pôle de la spirale, situé sur l'axe du rotor, une telle disposition favorisant le rejet du produit déchiqueté sur la périphérie pour être pris en charge par les pales (24) du ventilateur d'éjection.

10. Machine selon l'une quelconque des revendications 1 à 9, caractérisée en ce qu'elle comporte en partie supérieure de la benne et en amont de l'orifice d'entrée du produit dans la zone de déchiquetage, une herse ou peigne (26) constitué de dents verticales fixes ou escamotables, destiné à exercer une pression de contact permanente sur le produit, lequel peigne est supporté à ses extrémités par des bras latéraux (28) basculant autour d'un axe horizontal (29) permettant un réglage de positionnement en hauteur des dents du peigne selon le débit désiré du produit ou un escamotage du peigne pour l'utilisation de la machine en tant que dérouleuse de balles rondes.

11. Machine selon l'une quelconque des revendications 1 à 10, caractérisée en ce qu'elle comporte des moyens permettant de faire varier dans l'espace la position du dièdre, lesquels moyens consistent dans le montage des roues (3) de la remorque à l'extrémité de bras latéraux (4) oscillant autour d'axes horizontaux (5) sous l'action de vérins à double effet (6) provoquant le relevage ou l'abaissement de l'arrière de la remorque, le point d'attelage sur le tracteur restant fixe.

12. Machine selon l'une quelconque des revendications 1 à 11, caractérisée en ce que l'un des dispositifs permettant de faire varier dans l'espace la position du dièdre consiste dans l'articulation du timon (2) sur le châssis (1) autour d'un axe horizontal (25) permettant d'infléchir l'attelage, le point d'attelage sur le tracteur restant fixe.

## Claims

1. Machine intended for the distribution of forage gathered in round bales or of product from a silo intended for feeding cattle or for producing litter, consisting of a trailer of the type incorporating a chassis (1) equipped with a drawbar (2) for hitching to an agricultural tractor, a tub (7) fitted with a movable bottom (8) in the form of an endless belt conveying the unwound product towards a device for shredding and/or ejecting, the said belt forming a dihedral inside which the bale of forage, deposited horizontally and frontally relative to the direction of movement of the movable bottom (8) , is unwound, which dihedral is determined by two successive portions of trajectory: an upstream portion (8a , 8e ) and a rising portion (8b , 8f ), characterized in that the unwinding device, consisting of the said upstream (8a , 8e ) and rising (8b , 8f ) portions, forms a dihedral with an angle which can be varied by an adjustment of the inclination of the rising portion (8b , 8f ), this adjustment of inclination being made possible by the movement of the upstream portion (8a , 8e ) in the direction of the rising portion (8b , 8f ), which movement is related to the translational mobility of a shaft (16) situated at the upstream end of the belt.

2. Machine according to Claim 1, characterized in that the movable bottom (8) forming the device for unwinding the round bales is a conveyor belt of the type with side chains connected by rods whose trajectory consists of a substantially horizontal upstream portion (8a) extending between side pulleys (10) and the shaft (16), and of a rising portion (8b), which are jointed together around a horizontal shaft (9) carrying side pulleys (10), which rising portion (8b) is mounted so as to oscillate around a horizontal fixed shaft (11) passing through belt sprockets (12) situated at the topmost point of the belt's trajectory.

3. Machine according to Claim 2, characterized in that the adjustment of the inclination of the rising portion (8b) of the trajectory of the conveyor belt may be carried out manually or with the aid of a double-acting hydraulic jack (13) whose effect acts on a crossbar carrying at its ends the side pulleys (10) and guides for the chains (15) permitting the trajectory of the latter to be changed.

4. Machine according to either of Claims 2 and 3, characterized in that the shaft (16) situated at the upstream end of the upstream portion (8a) of the conveyor belt is mounted on a skid movable in translation in a slide (17) fixed integrally to the chassis, in order to permit the translational movement of the said end caused by the angular change in the dihedral.

5. Machine according to Claim 1, characterized in that it comprises, extending the said rising trajectory portion (8b) and forming part of the same belt, a horizontal trajectory portion (8c) on which an operation of demixing the product is optionally carried out before the latter is discharged towards the shredding and/or ejecting device.

6. Machine according to Claim 1, characterized in that the trajectory of the conveyor belt (8) consists of a horizontal upstream portion (8a), of variable length, a portion (8b) rising to a topmost point corresponding to the belt travel over driving sprockets (12), followed by a descending inclined portion (8d) ending on a horizontal downstream portion of trajectory (8c) of fixed length, the dihedral making it possible to hold the bale during its unwinding being, in the case of a movement of the belt from upstream towards downstream, that formed by the upstream portion (8a) and the rising portion (8b) and, in the case of a reverse direction of movement of the belt, the dihedral formed by the downstream (8c) and descending (8d) portions of trajectory, the change in the angular value of the dihedral being capable of being produced in either case by displacement of the shaft (11) carrying the belt-driving sprockets (12) situated at the topmost point of the active trajectory, by horizontal and/or vertical translation, this change being made possible by the translational mobility of the shaft (16) carrying the end sprockets of the upstream portion of the belt, which sprockets are mounted on a skid travelling in a slide (17).

7. Machine according to Claim 1, characterized in that the trajectory of the belt consists of a horizontal upstream portion (8a) of variable length, an inclined portion (8e) descending down to the lowest point of the trajectory corresponding to the belt travel over the driving sprockets (12), followed by a rising inclined portion (8f) ending on a horizontal downstream portion of trajectory (8c) of fixed length, the dihedral permitting the bale to be held as it is unwinding being, whatever the direction of movement of the belt, that formed by the inclined descending (8e) and rising (8f) portions, the change in the angular value of the dihedral being capable of being produced by displacement of the shaft (11) carrying the belt-driving sprockets (12) situated at the lowest point of the active trajectory, by horizontal and/or vertical translation, this change being made possible by the translational mobility of the shaft (16) carrying the end sprockets of the upstream portion of the belt, which sprockets are mounted on a skid travelling in a slide (17).

8. Machine according to any one of Claims 1 to 7, characterized in that the end of the downstream portion of trajectory of the conveyor belt discharges at the shredding device through a rectangular cutout made in the front face of the fairing (19) of the ejection device, which cutout is edged at its low part by a flexible bib (30) intended to prevent the product falling under the rising part (8b, 8f) of the belt.

9. Machine according to any one of Claims 1 to 8, characterized in that the shredding device consists of a certain number of teeth (22) set into the front face of the rotor (18) of the ejection fan, in a slightly inclined position and concurrent towards the rotor shaft and distributed along an Archimedes' spiral such that, depending on the direction of rotation, the setting points of the successive teeth move away from the pole of the spiral, which is situated on the rotor shaft, such an arrangement promoting the rejection of the shredded product on the periphery to be taken over by the blades (24) of the ejection fan.

10. Machine according to any one of Claims 1 to 9, characterized in that it incorporates, in the upper part of the tub and upstream of the orifice for the entry of the product into the shredding zone, a harrow or comb (26) consisting of fixed or retractable vertical teeth, which is intended to apply a continual contact pressure to the product, which comb is supported at its ends by side arms (28) swinging around a horizontal shaft (29) permitting an adjustment of the height positioning of the teeth of the comb depending on the required output of the product, or a retraction of the comb for the use of the machine as an unwinder for round bales.

11. Machine according to any one of Claims 1 to 10, characterized in that it incorporates means making it possible to change the position of the dihedral in space, which means consist in mounting the trailer wheels (3) at the end of side arms (4) oscillating around horizontal shafts (5) under the action of double-acting jacks (6) causing the lifting or lowering of the rear of the trailer, the point of hitching to the tractor remaining fixed.

12. Machine according to any one of Claims 1 to 11, characterized in that one of the devices making it possible to change the position of the dihedral in space consists in articulating the drawbar (2) to the chassis (1) around a horizontal shaft (25) making it possible to inflect the hitching, the point of hitching to the tractor remaining fixed.

## Ansprüche

1. Vorrichtung zur Verteilung von in runden Ballen geerntetem Futter oder von Silagefutter zum Füttern von Vieh oder zum Einstreuen, bestehend aus einem Anhänger mit einem Chassis (1) und einer zum Anhängen an einen Traktor dienenden Zugdeichsel (2), einem Wagenkasten (7), der mit einem mobilen Boden (8) in Form eines Endlosbandes versehen ist, welches das abgewickelte zu verteilende Produkt in Richtung auf eine Zerkleinerungs- und/oder Auswerfeinrichtung bewegt, wobei das Band V-förmig abgewinkelt einen Zweiflach bildet, in dessen Innern der Futterballen sich abrollt, der horizontal und frontal bezüglich der Abspulrichtung des mobilen Bodens angeordnet ist und wobei der Zweiflach durch zwei aufeinanderfolgende Bahnabschnitte bestimmt ist: einen stromaufwärtigen Abschnitt (8a, 8e) und einen aufsteigenden Abschnitt (8b, 8f), dadurch gekennzeichnet, daß die Abrollvorrichtung, die aus dem genannten stromaufwärtigen Abschnitt (8a, 8e) und dem aufsteigenden Abschnitt (8b, 8f) besteht, einen Zweiflach mit einem variablen Innenwinkel bildet, der durch die Steuerung der Neigung des ansteigenden Abschnitts (8b, 8f) regelbar ist, wobei diese Neigungsregelung durch eine Verschiebung des stromaufwärtigen Abschnitts (8a, 8e) in Richtung auf den aufsteigenden Abschnitt (8b, 8f) ermöglicht wird, die durch die Verschiebbarkeit einer Achse (16) am stromaufwärtigen Ende des Endlosbandes gegeben ist.

2. Vorrichtung nach Anspruch 1, dadurch gekennzeichnet, daß der die Vorrichtung zum Abrollen der runden Ballen bildende mobile Boden (8) ein Transportband mit seitlichen Ketten darstellt, welche durch Stege miteinander verbunden sind, wobei die Bahn des Bandes sich aus einem stromaufwärtigen Abschnitt (8a), der im wesentlichen horizontal verläuft und sich zwischen seitlichen Schnurscheiben (10) und der Achse (16) erstreckt, und einem aufsteigenden Abschnitt (8b) zusammensetzt, die um eine horizontale Achse gegeneinander abgewinkelt sind, welche ihrerseits die seitlichen Schnurscheiben (10) trägt, wobei der ansteigende Abschnitt (8b) um eine feste horizontale Achse (11) schwenkbar ist, die durch die Antriebsscheiben (12) des Bandes verläuft, die am Kulminationspunkt der Bahn des ansteigenden Abschnitts (8b) angeordnet sind.

3. Vorrichtung nach Anspruch 2, dadurch gekennzeichnet, daß die Neigungsregelung des ansteigenden Abschnitts (8b) der Bahn des Transportbandes manuell oder mit Hilfe eines doppelt wirkenden Hydraulikzylinders (13) erfolgt, der auf eine Traverse einwirkt, die an ihren Enden die seitlichen Schnurscheiben (10) sowie die Kettenführungen (15) trägt, welche die Bahnänderung ermöglichen.

4. Vorrichtung nach Anspruch 2 oder 3, dadurch gekennzeichnet, daß die Achse (16) am stromaufwärtigen Ende des stromaufwärtigen Abschnitts (8a) des Transportbandes auf einem Schlitten montiert ist, der translatorisch in einer Laufschiene (17) verschiebbar ist, die am Chassis befestigt ist, um die translatorische Verschiebung dieses Bandendes zu ermöglichen, die durch die Winkelveränderung des Zweiflachs provoziert wird.

5. Vorrichtung nach Anspruch 1, dadurch gekennzeichnet, daß sie in Verlängerung des ansteigenden Abschnitts (8b) und einen Teil des Bandes bildend einen horizontalen Bahnabschnitt (8c) enthält, auf dem eventuell eine Entflechtung des Produkts vor dem Eintritt in die Schneid- und/oder Auswurfeinrichtung bewirkt wird.

6. Vorrichtung nach Anspruch 1, dadurch gekennzeichnet, daß die Bahn des Transportbandes (8) zusammengesetzt ist aus einem horizontalen stromaufwärtigen Abschnitt (8a) variabler Länge, einem ansteigenden Abschnitt (8b) bis zu einem Kulminationspunkt, der der Passage des Bandes über die Antriebsscheiben (12) entspricht, gefolgt von einem nach abwärts geneigten Abschnitt (8d), der in einen horizontalen stromabwärtigen Bahnabschnitt (8c) mit fester Länge übergeht, wobei der Zweiflach zum Haltern des Ballens während seines Abrollens infolge des Bandtransports vom stromaufwärtigen zum stromabwärtigen Ende gebildet ist, vom stromaufwärtigen Abschnitt (8a) und dem ansteigenden Abschnitt (8b), und daß für die umgekehrte Bewegungsrichtung des Bandes der Zweiflach durch den stromabwärtigen Bahnabschnitt (8c) und den nach unten geneigten Bahnabschnitt (8d) gebildet wird, wobei die Veränderung des Innenwinkels des Zweiflachs in beiden Fällen durch horizontale und/oder vertikale Verschiebung der Achse (11) bewirkt werden kann, welche die Antriebsscheiben (12) des Bandes im Kulminationspunkt der Bahn trägt, und ermöglicht wird durch die translatorische Verschiebbarkeit der Achse (16), welche die Umlenkscheiben des stromaufwärtigen Bandabschnitts trägt, die ihrerseits auf einem Schlitten montiert sind, der in einer Gleitschiene (17) sich verschieben kann.

7. Vorrichtung nach Anspruch 1, dadurch gekennzeichnet, daß die Bahn des Bandes zusammengesetzt ist aus einem horizontalen stromaufwärtigen Abschnitt (8a) variabler Länge, einem geneigt nach unten abfallenden Abschnitt (8e), der bis zum unteren Umkehrpunkt des Bandes über die Antriebsscheiben (12) reicht, gefolgt von einem nach oben ansteigenden Bandabschnitt (8f), der in einen stromabwärtigen horizontalen Bahnabschnitt mit fester Länge übergeht, wobei der Zweiflach zur Aufnahme des Ballens während des Abwickelns - unabhängig von der Bewegungsrichtung des Bandes - durch die geneigten Abschnitte (8e) und (8f) gebildet wird, und wobei die Veränderung des Winkels des Zweiflachs durch horizontale und/oder vertikale Verschiebung der die Antriebsscheiben (12) des Bandes am untersten Punkt der Bahn tragenden Achse (11) bewirkt wird, was durch die translatorische Verschiebbarkeit der Achse (16) ermöglicht wird, welche die Umlenkscheiben am Ende des stromaufwärtigen Abschnitts trägt, die hierzu auf einem in einer Führungsbahn (17) verschiebbaren Schlitten montiert sind.

8. Vorrichtung nach einem der Ansprüche 1 bis 7, dadurch gekennzeichnet, daß das Ende des stromabwärtigen Abschnitts des Transportbandes in Höhe der Zerkleinerungseinrichtung vor einem rechteckigen Durchbruch in der Frontverkleidung (19) der Auswerfereinrichtung liegt, wobei der Durchbruch am unteren Ende durch eine weiche Klappe (30) begrenzt ist, die ein Durchfallen des Produkts unter die ansteigenden Abschnitte (8b, 8f) des Bandes verhindert.

9. Vorrichtung nach einem der Ansprüche 1 bis 8, dadurch gekennzeichnet, daß die Zerkleinerungseinrichtung aus einer bestimmten Anzahl von Zähnen (22) besteht, die in die Frontfläche des Rotors (18) des Auswerfventilators eingelassen sind, wobei die Zähne die Achse des Rotors schneidend und etwas in Richtung der Achse des Rotors geneigt auf einer archimedischen Spirale derart angeordnet sind, daß bei einer Rotation die Ansatzpunkte aufeinanderfolgender Zähne sich vom auf der Achse des Rotors angeordneten Pol der Spirale entfernen, wodurch das Austragen des zerkleinerten Produkts über die Peripherie begünstigt wird, so daß es von den Schaufeln (24) des Auswerfventilators erfaßt werden kann.

10. Vorrichtung nach einem der Ansprüche 1 bis 9, dadurch gekennzeichnet, daß sie oberhalb des Wagenkastens und stromaufwärts von der Eintrittsöffnung des Produkts in die Zerkleinerungszone gelegen eine Egge oder einen Kamm (26) enthält, der aus vertikalen starren oder einklappbaren Zähnen besteht, die dazu dienen, einen permanenten Kontaktdruck auf das zu verteilende Produkt auszuüben, wobei der Kamm an seinen Enden durch seitliche Arme (28) getragen wird, die um eine horizontale Achse (29) schwenkbar sind und eine Regelung der Höhenpositionierung der Zähne des Kamms entsprechend dem gewünschten Austrag des Produkts, oder ein Einschwenken des Kamms zur Verwendung der Vorrichtung als Abrolleinrichtung für runde Ballen, ermöglichen.

11. Vorrichtung nach einem der Ansprüche 1 bis 10, gekennzeichnet durch Einrichtungen, um die Position des Zweiflachs im Raum zu variieren, wobei diese Einrichtungen dadurch gebildet sind, daß die Räder des Anhängers an den Enden von seitlichen Armen (4) montiert sind, die um horizontale Achsen (5) unter der Wirkung von doppeltwirkenden Zylindern (6) verschwenken, wodurch das hintere Ende des Anhängers bei festem Anhängepunkt der Deichsel am Traktor angehoben oder abgesenkt wird.

12. Vorrichtung nach einem der Ansprüche 1 bis 11, dadurch gekennzeichnet, daß die Einrichtung zur Veränderung der Position des Zweiflachs im Raum durch eine Anlenkung der Zugdeichsel (2) am Chassis (1) um eine horizontale Achse (25) gebildet wird, die bei festem Anhängepunkt der Deichsel am Traktor ein Durchbiegen der Achse und damit ein Sich-Neigen des Anhängers ermöglicht.

_FIG.1_

EP 0 172 084 B1

FIG.2

_FIG.3_

11

2    25

5    13    4

8b

9

6

7

8a

3

_FIG.4_

11

2    25

5    13    4

8b

9

6

7

8a

3

FIG.5

FIG.6

FIG.7

FIG.8

FIG.9